# EUROPEAN PATENT APPLICATION

(11) **EP 2 647 293 A1**
(43) Date of publication of application: **09.10.2013**
(21) Application number: 13175158.8
(22) Date of filing: 10.06.2009
(51) Int. Cl.: A23C 9/00, A23C 9/13, A23C 9/142, A23C 9/18, A23C 19/00, A23C 19/05, A23J 1/20, A23C 9/152

(54) **Process for manufacturing cheese using milk protein concentrate powder**

(30) Priority: 10.06.2008 IE 20080476
(62) Divisional of application: 09761746.8
(71) Applicant: TEAGASC, The Agriculture and Food Development Authority, Dublin 4 (IE)
(72) Inventor: Guinee, Timothy P, Carlow (IE); O'Kennedy, Brendan T, Carlow (IE); Kelly, Philip M, Carlow (IE); Mounsey, John, Carlow (IE)
(74) Representative: Gates, Marie Christina Esther

(57) **Abstract**

The present invention relates to the development of micellar sasin (MCCa) and milk protein concentrate (MPCCa) powders, with different calcium-to-casein ratios and buffering capacity. The invention also relates to the use of the MCCa and MPCCa powders in the preparation of reassembled milks. More specifically the invention relates to the use of such reassembled milks in the production of cheese or cheese-style products.

## Description

### Field of the Invention

The present invention relates to the development of micellar casein (MCCa) and milk protein concentrate (MPCCa) powders, with different calcium-to-casein ratios and buffering capacity. The invention also relates to the use of the MCCa and MPCCa powders in the preparation of reassembled milks. More specifically the invention relates to the use of such reassembled milks in the production of cheeses or cheese-style products. The invention also relates to a novel cheesemaking technology used to convert reassembled milks into cheeses and / or cheese style products with a range of composition, functional, sensory, rheological, textural, cooking properties, and health properties. This novel cheesemaking technology differs from those previously described in that it does not involve a whey separation step.

### Background to the Invention

Conventional cheese manufacture is a two thousand year old technology. Since the early 20^{th} century when cheese became a significant trade item, cheese manufacture has undergone enormous standardisation and development. The ingenuity of this technology is the fact that it provides a means of recovering and preserving the insoluble components of fresh milk i.e. casein, fat, colloidal minerals, in the form of a safe nutritious product, namely cheese. Conventional cheese making is a multi-step process. The initial steps involve the acidification and coagulation of milk. The milk is ripened by the addition of a starter culture of bacteria; this lowers the pH and greatly aids the coagulation step. Coagulation is achieved by the addition of a milk-curdling enzyme such as rennin. This results in curd formation. Dehydration of the resultant curd is carried out by a series of processes. These processes include breaking or cutting the curd into pieces to form curd particles and agitation of the resultant curd particles in whey. Whey is a by-product of cheese manufacture and is expressed from the curd upon cutting. The subsequent steps involve cooking of the curd particles in whey, whey drainage, moulding of the drained curd into various forms, pressing and / or salting of the curd and ripening of the curd. These processes are undertaken at defined conditions of time, temperature and humidity.

During the cheese making process there are several critical parameters that can influence the physical and rheological characteristics of the resultant cheese. These parameters are pH, temperature, calcium (Ca) levels, casein-to-casein interactions and proteolysis. Such parameters can be manipulated during the cheese making process to produce the desired cheese with specific characteristics.

A significant amount of the calcium (Ca) in cheese is associated with a phosphoprotein called Casein. Casein phosphoprotein is found in milk and cheese and is an integral part of the protein matrix. The Ca associated with casein is referred to as insoluble Ca. The equilibrium between the casein-associated and soluble calcium levels in any cheese is influenced by moisture content, pH and maturation (Guinee et al., 2000; Kindstedt et al., 2001; Lucey et al., 2005; Lawrence et al., 1987; Fenelon, 2000; Tunick et al., 2007). In conventional cheese manufacture, the different calcium levels in cheese are achieved by controlling the amount of casein-associated calcium that is released or solubilised prior to separation of the curd from whey. The level of calcium that is soluble and released at whey drainage corresponds to approximately 35 to 55 % of the total calcium in the milk, depending inter alia on curd pH, curd temperature and curd moisture. The soluble calcium migrates into the surrounding whey and is then removed during separation of the whey. Further calcium is lost during cheddaring (e.g., as in Cheddar), moulding, salting, pressing and/or plasticizing (e.g., as in Mozzarella), again being soluble in the whey released during these stages. The insoluble Ca associated with casein remains in the final curd. A portion of it solubilises and is released into the moisture phase of the cheese.

Colloidal calcium phosphate (CCP) [Ca₃ (PO₄)₂] is the major buffering substance in milk and cheese, tending to resist pH change very strongly in the region of 5.3 to 4.8 (Lucey et al, 1993). When the pH of cheese is within this region the colloidal calcium phosphate begins to solubilise. This leads to the formation of phosphate anions. These phosphate anions combine with H⁺, thereby minimizing the change in pH. Consequently, in cheese with a higher than normal proportion of calcium phosphate, the pH tends to remain higher despite the addition of starter culture. This causes the starter culture bacteria to grow to higher cell densities. Mespohilic and thermophilic lactococcus strains, which are widely used as starter cultures in cheese, become rapidly inhibited as the pH falls below 5.4 (Parente et al., 2004). To avoid acid stress, suppliers frequently use media which have in-built buffering systems (e.g., calcium phosphate, calcium and magnesium phosphate) to maintain pH at 6.0 - 7.0.

A basic difference between making cheese from normal milk and high concentration factor ultrafiltered milk retentates (with dry matter level close to the final cheese) is that the latter have very high buffering capacity, making it difficult to attain the normal pH (Covacevich et al., 1979; Abd- El-Salam et al., 1984; Lawrence, 1989). Consequently, starter cultures reach very high cell numbers (Kosikowski et al., 1992) and must be allowed to do so in order to produce the high levels of lactic acid required to reduce the pH of the cheese. However, high starter cell numbers lead to bitterness (Lowrie et al., 1972; Mortensen, 1984; Wilkinson et al., 1995). Bitterness may be attributed to the production of bitter peptides from β-casein by the cell wall proteinase (CEP) system of the starter culture.

The CEPs of *Lactococcus,* the major species of starter culture bacteria used in cheese manufacture, may be categorized into two broad groups based on their specificity on caseins, P_{I}- and P_{III}-type proteinases. The different proteinase types may contribute differently to cheese flavour because of differences in specificity and the peptides they produce from casein (Reid and Coolbear, 1999).

It has been postulated that starter culture strains possessing P_{I}- type proteinase (e.g., *Lc. lactis* subsp. *cremoris* strains HP and WG2) degrade casein rapidly and may, thereby, contribute to bitter flavour in cheese. The bitterness of peptides is strongly correlated with hydrophobicity (Guigoz et al, 1976; Bumberger et al, 1993). The bitter peptides in cheese appear to arise primarily from β-casein (see Visser et al., 1983a, b; Frister et al., 2000), as might be expected since β-casein is the most hydrophobic casein; however, peptides from αₛ₁- and αₛ₂-caseins, especially those containing proline, probably also contribute to bitterness in cheese (Lee et a1, 1996; Frister et al., 2000). In contrast to P_{I}- type proteinase, P_{III}- type proteinases hydrolyse β-casein differently and rapidly degrade αₛ₁ and κ-caseins; starter cultures (e.g. *Lc. lactis* subsp. *cremoris* strains AM1, SK11) having P_{III}- type proteinase tend to give non-bitter cheese.

The use of casein powders with defined calcium and phosphate contents for the preparation of the liquid pre-cheese in the current system ensures that the calcium phosphate and hence, pH and buffering capacity, of the cheese can be accurately controlled to levels which are not conducive to the development of high starter culture cell numbers and formation of bitter flavour. While the propensity to formation of bitter flavour in the cheese from the liquid pre-cheese could be reduced by the use of added food grade acids (e.g. lactic) or acidogen, rather than starter culture, to reduce the pH of the pre-cheese, the omission of starter culture is undesirable from several respects (Fox et al., 1990; Cogan, 1995; Beresford et al., 2007; Fox et al 2004):
(i) Cheese conventionally contains added starter culture to reduce pH via fermentation of the lactose in milk to lactic acid, a key contributor to the preservation of cheese;
(ii) Inoculated starter culture dominates the microflora of the cheese and fully utilises the readily available energy source (lactose), thereby making it more difficult for spoilage bacteria to grow;
(iii) Starter culture contributes to the typical fine flavour of cheeses.

Intra-varietal differences in cheese composition are common but undesirable since they contribute to differences in nutritional status, rate of maturation and the physical properties of the cheese. These differences were demonstrated in a survey by Guinee *et al. (2000),* which reported the range of casein and calcium levels in retail samples of Cheddar and Mozzarella (Table 1.) Cheddar samples were found to contain 23.9 to 25.9% protein, 26.7 to 30.2 mg Ca/g protein and Mozzarella samples reportedly contained 24.0 to 29.8% protein and 22.6 to 31.1 mg Ca/g protein (Guinee et al, 2000). A major factor contributing to this variation is seasonal variation in milk composition. Other contributory factors include the use of non-standardized procedures and variations in starter culture activity and equipment maintenance/performance (Lucey et al., 1992; Lucey et al., 1992; O'Brien et al., 1999; Guinee et al., 2008). The calcium-to-casein ratio within a given variety can vary dramatically, leading to marked variations in functional and physical properties of the cheese.

**Table 1: Calcium-to-casein ratio in retail samples of different cheese varieties. (¹ For these cheeses, 90 to 100% of the protein in the cheese is casein).**

| **Calcium-to-protein ratio in retail sample of different cheese varieties¹** | | | |
|---|---|---|---|
| | Protein (%, w/w) | Calcium (mg/100g) | Calcium-to-protein ratio (mg/g protein) |
| Cottage cheese A | 15.2 | 65 | 4.3 |
| Cottage cheese B | 16.3 | 170 | 10.4 |
| Cream Cheese | 7.6 | 80 | 10.6 |
| Stilton Cheese | 22.7 | 400 | 17.7 |
| Italian fresh mozzarella | 18.9 | 371 | 19.6 |
| Bavarian Blue | 15.1 | 310 | 20.5 |
| Irish Blue | 19.0 | 400 | 21.1 |
| French Brie A | 17.7 | 380 | 21.5 |
| Cambozola | 12.9 | 300 | 23.3 |
| Cheshire A | 22.7 | 560 | 24.7 |
| Cheshire B | 21.2 | 540 | 25.5 |
| French Brie B | 18.2 | 500 | 27.5 |
| Low moisture part skim Mozzarella | 26.0 | 730 | 28.1 |
| Camembert | 18.8 | 530 | 28.2 |
| Cheddar | 24.0 | 690 | 28.8 |
| Port Salut | 20.3 | 600 | 29.6 |
| Emmental | 28.1 | 1000 | 35.6 |

Milk protein concentrates (MPCs) comprising casein and whey protein, are widely available on the market. The gross composition of MPCs is known: typically 75-85% proteins; 7-8% ash: 1-4% fat: casein-whey protein ratio, 4:1. In a typical market application, MPCs may be reconstituted into high solids milks for the manufacture of fresh cheeses for example high moisture cheeses such as Fromage Frais, Quark, and cream cheese. However the process of making these commercially available MPCs are mainly based around ultrafiltration (UF), and moreover these processes are unlikely to be removing calcium to control the calcium-to-casein ratio in the powders, which is an important aspect of the current invention.

There are currently patents relating to the production of cheese using a technique that does not involve a whey separation step. Patent EP 1733622 (Kalamas and Kincaid, 2006) describes the manufacture of cultured dairy products, in particular cultured cream, which have reduced levels of cultured dairy materials. These products are prepared without a whey separation technique. The process involves manufacture of a pre-cheese which is a blend that maybe comprised of milk with varying fat levels, milk solids, cream and the like. The method of cheese manufacture disclosed in EP 1733622 does not allow for the control of the calcium-to-casein ratio in the resultant cheese. The production of phosphocasein has been described by Fauquant et al. (1988). Garem *et al* (2000) published a paper describing the manufacture of cheese prepared from recombined milk produced from a whey protein depleted milk powder, the solids content of the recombined milk in the case was close to that of normal milk. The whey protein depleted milk powder was produced by drying a blend of microfiltered milk retentate with a permeate from ultrafiltered-treated microfiltration permeate. The recombined milk was approximately 9.6% solids, standardised with fat and made into cheese using conventional technology. The calcium-to-casein ratio in the recombined milk was as in normal milk. The overall objective of this French study was to improve the quality of skim milk powder for cheesemaking using conventional technology, by taking out the whey protein. Regular skim milk powder can be unsuitable for cheesemaking due to denaturation of whey proteins during drying.

Therefore there is a need to develop a standard method of cheese manufacture, so as to minimise intra-variety differences in composition and quality. The inadvertent intra-varietal differences outlined above are circumvented by the current invention owing to the use of casein powders with defined calcium contents and a defined manufacturing procedure without whey drainage. The blending of the ingredients with different calcium and phosphate levels at fixed ratios ensures the manufacture of cheeses that have the desired consistency by precise control of composition and calcium levels. This method will also enable the development of a new generation of cheeses e.g. health cheese with high Ca and added bioactive and pre-biotic materials such as hydrocolloids and oligosaccharides. It is presumed based on conventional cheese manufacture that much of these materials, if added to the milk, would be lost in the cheese whey during conventional cheese manufacture.

There is also a need to produce a reliable and consistent probiotic cheese. As described above, fluctuations in calcium phosphate levels and hence in pH and buffering capacity, lead to fluctuations in starter culture cell numbers and would have the same effect on probiotic cultures. It is therefore probable that cheeses marketed as 'probiotic' contain variable populations of probiotic culture bacteria depending on cheese composition (e.g. salt, lactic acid content) and matrix environment (pH).

### Object of the Invention

It is an object of the invention to provide MCCa and MPCCa powders with defined calcium levels, as well as methods for producing them. It is also an object to provide a means for manufacture of cheeses from MPCCa and MCCa, where the latter have been modified in terms of calcium and buffering capacity. Cheeses of desired final solids levels and calcium levels are made from reassembled milks, prepared from blending the powders with permeate from ultrafiltered milk or whey permeate, and/or water. It is a further object of the invention to provide an alternative manufacturing process for cheese with a range of functional and rheological properties from reassembled milks. This novel manufacturing process does not involve a whey separation technique.

### Summary of the Invention

According to the present invention there is provided a process for the production of a MCCa or a MPCCa comprising adding a calcium sequestrant to skimmed milk or the permeate resulting from the microfiltration of skimmed milk to give a calcium level of 30 to 40 mg/g protein. Suitably the calcium level is adjusted to 32 mg/g protein. The calcium level may be 32 to 40mg/g protein.

Suitable calcium sequestrants include mixtures oftri-, di-, and mono-sodium citrate with citric acid; the potassium salts of citric acid; the sodium and potassium salts of food grade organic acids including lactic, acetic and oxalic acids; and the sodium or potassium salts of phosphates, trisodium citrate and citric acid. Particularly preferred are trisodium citrate and citric acid. These may be used as an aqueous solution or as a powder. Trisodium citrate and citric acid may be used at molar ratios of ~ 7.5: 1 to maintain the pH value of milk at native values, typically in the range 6.6 to 6.7.

Preferably 0 to 24 kg oftrisodium citrate dehydrate and 0 to 2 kg of citric acid anhydrous is added, in powder form or as an aqueous solution (e.g. 5- 10%), per 1000 kg skim milk or permeate resulting from the microfiltration of skim milk on a 1.4µm membrane.

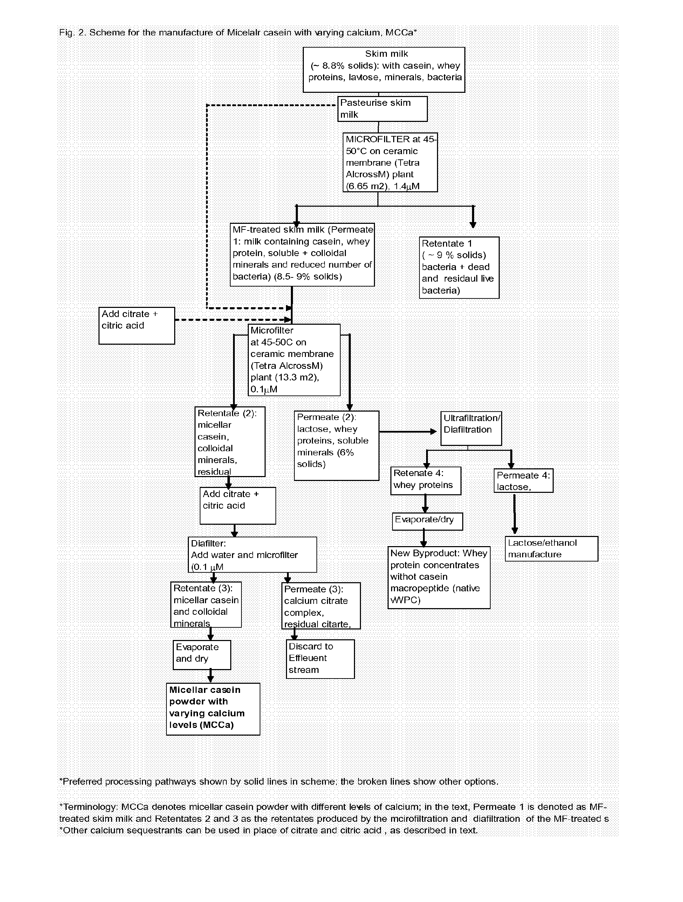

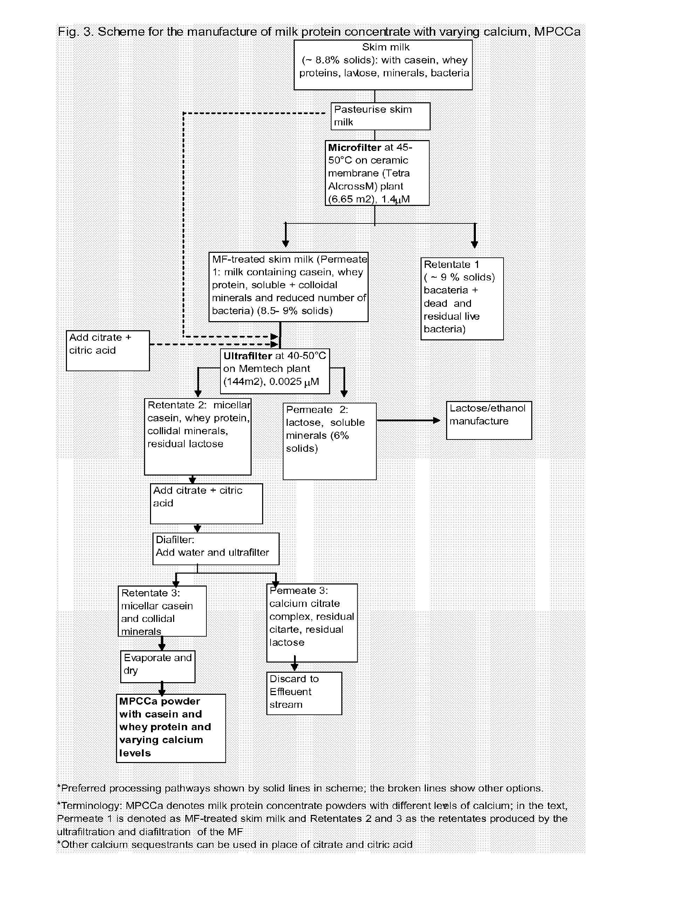

One embodiment comprises an optional first step of microfiltering the skimmed milk using membranes of 1.4 µm so as to reduce bacterial load (McSweeney et al., 1993) prior to subsequent filtration steps. The permeate from this optional microfiltration is skim milk with a reduced bacaterial load and is MF-treated skim milk (Figures2, 3). The calcium sequestrant such as sodium citrate and citric acid are then added to the MF-treated skim, although they could also be added to the retentates obtained on subsequent microfiltration (as in the case of MCCa) or ultrafiltration (as in the case of the MPCCa) of the MF-treated skim milk.

Suitably the MF-treated skimmed milk is ultrafiltered using membranes of about 10 kDa (~ 0.0025 µm) prior to the addition of the trisodium citrate and citric acid to produce an MPCCa retentate. Alternatively, they are added after the ultra-filtration step.

In an alternative embodiment the MF-treated skimmed milk is microfiltered a second time with membranes of 0.05 -0.20 µm (preferably 0.1 µm) to produce a MCCa retentate. Alternatively the citrate/ citric acid solution and trisodium citrate are added alter the second microfiltration step.

Suitably water is added to either ultrafiltration or microfiltration retentate at a level equivalent to 80-100 parts water per 100 parts of MF-treated skimmed milk to produce a diluted retentate. The soluble citrate-calcium complex and unreacted citrate/citric acid may then be removed by diafiltration of the diluted milk retentate and the resultant diafiltration retentate may then be evaporated and spray dried to produce a powder. If an ultrafiltration step has been used in place of the second microfiltration step above, an MPCCa powder is produced (whereas if two microfiltration steps are used, an MCCa powder is produced).

The skim milk for both the manufacture of MCCa and MPCCa is optionally, but preferably, first microfiltered on a 1.4 µm membrane to reduce the bacterial load prior to subsequent concentration steps through lower-porosity membranes which would concentrate the bacteria should they be present (commercially the process of bacteria removal is frequently used to prolong the shelf life of milk and is referred to as the Bactocatch system). In any case, this optional first filtration step produces a retentate and a permeate. The retentate can be discarded or very high heat-treated and used elsewhere The permeate is the skim milk with a very much reduced (e.g., > 99%) bacterial load - this is the material that is further processed for the manufacture of MCCa and MPCCa; for clarity, this is referred to herein as microfiltration-treated (MF-treated) skim milk.

The invention also provides a MCCa and / or MPCCa powder having a calcium level of -up to 40mg/g protein i.e. < 1 up to 40 mg/g, most preferably 32 mg/g protein.

In a still further aspect the invention provides a process for the manufacture of cheese with a range of functional and rheological properties, comprising the conversion of reassembled milks derived from a MCCa or MPCCa powder or a combination thereof, as produced by a process described above, into cheeses and/or cheese style products with calcium levels ofup to 40mg/g protein, preferably 7 - 32 mg/g, most preferably 32 mg/g protein. Milk fat may be added to the reassembled milk prior to cheese production.

The current invention provides a means for the preparation of reassembled milks using novel dairy and non-dairy ingredients. The novel dairy ingredients are micellar caseins (MCCa) and/or milk protein concentrates (MPCCa). The MCCa and MPCCa powders have protein levels ranging from 74 to 80% (w/w), fat levels of < 2% (w/w), total calcium of 0 -40 mg/g, total phosphorus of 10 -25 mg/g, colloidal inorganic phosphorus of 2 to 12 mg/g protein, total sodium of 2 to 12 mg/g and total magnesium levels of 0.65 to 1.3 mg/g. The MCCa and MPCCs powders also have different calcium levels ranging from <1 to 40 mg/g. This variation in the level of cheese calcium enables the diverse range of texture, rheology and cooking properties displayed by cheeses. The MPCCa can be prepared with whey protein denaturation levels ranging from 10 to 80% of total whey protein by varying pasteurization conditions of the skimmed milk.

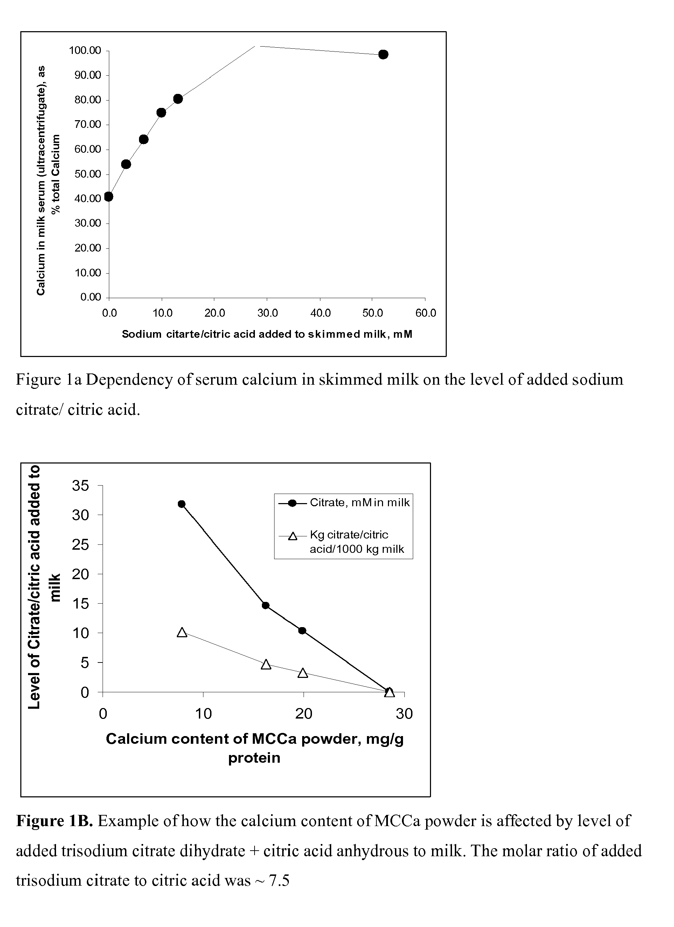

The MCCa and MPCCa are prepared from skimmed milk. This skimmed milk is obtained from milk by fat separation at 45-80 °C. The skimmed milk is microfiltered using membranes (1.4 µm) to partially remove and reduce bacteria. A citrate/citric acid powder mixture or solution is added to the resultant permeate, (which is herein referred to as micro filtered-treated skim(MF-treated skimmed milk))at levels resulting in calcium in MCCa and MPCCa of up to 32mg/g protein. The citrate/citric acid may be also added to the retentate obtained after microfiltration of the MF-treated in the case of MCCa or after ultrafiltration in the case of MPCCa prior to diafiltration or further microfiltration and ultrafiltration. The level of citrate/citric acid solution added to the skimmed milk is used to adjust the calcium-to-protein ratio of the MCCa and MPCCa powders. The relationship between calcium level required and the quantity of citrate/citric acid to be added to the skim milk during the manufacture of the powders was established by prior experimentation at laboratory level to determine the effect of added trisodium citrate dihydrate + citric acid anhydrous on the percentage of total calcium in skimmed milk that was soluble in the milk serum as prepared by ultracentrifugation; these data are presented in Figure 1a. From this figure, it was possible to determine molarity, or weight of, trisodium citrate dihydrate and citric acid anhydrous to be added per given weight of milk; these data are presented graphically in Figure 1b. The citrate combines with calcium on the casein, and the soluble citrate-calcium complex and any remaining citrate is washed out by diafiltration during the manufacture of MCCa and MPCCa.

In the current invention the manufacture of MCCa and MPCCa differs. In the preparation of MCCa, the skimmed milks are microfiltered, ideally within a few hours, or are otherwise stored at refrigeration temperatures. The skim milk is then microfiltered (1.4 µm membrane). The citrate and citric acid are then added to the MF-treated skimmed milk; alternatively, the MF-treated skim milk may be microfiltered using a 0.05 - 0.12 µm membrane and the citrate and citric acid are added to the resultant retentate at the same level. Water is then added at a level equivalent to 80-100 parts water per 100 parts skimmed milk or MF-treated skimmed milk. The water-retentate mixture is then microfiltered using 05-0.12 µm membranes (preferably a 0.1µM membrane). The retentate containing the casein and colloidal minerals is evaporated and spray dried to yield the MCCa powder, as shown in Fig 2.

In the preparation of MPCCa, the skimmed milk or MF-treated skim milk is ultrafiltered though a 0.0025µm (10 kDa) membrane. The retentate containing the casein, whey protein and colloidal minerals is evaporated and spray dried to yield the MPCCa powder as illustrated in Fig 3.

Alternatively, MCCa- and MPCCa-style ingredients can also be prepared from milk protein ingredients such as acid casein or acid milk protein, without the need for membrane technology. Acid casein refers to the protein obtained by acidification of the pasteurized skim milk to the isoelectric pH (4.6) of the caseins by direct addition of one or more acids (for example mineral acids such as HCL, and/or organic acids such as lactic, acetic) or of acidogens (such glucono-δ-lactone), or by fermentation using a starter culture which converts the lactose in the serum phase of the milk to lactic acid and thereby reduces the pH to the casein isoelectric point. The resultant gel/coagulum/precipitate, is stirred/broken, heated, washed in water and centrifuged (decanted), to give a concentrated curd which is dried to give a powder containing casein. Milk proteinate refers to a powder containing casein and whey protein produced by the following steps: pH-adjustment of skim milk to values that are higher (e.g. pH 7.5 to 9.0) or lower (e.g. pH 3.5) than that of the native milk (typically pH 6.65); high heat treatment (typically 80-90°C for 2-10 min), re-adjustment of pH to 4.6 using acid, acid or alkali; stirring, heating, washing, centrifugation and drying of the resultant coagulum/precipitate, frequently referred to as 'wet curd'. The dried protein powder contains the casein and whey proteins. For both the acid casein and acid milk protein powders, the calcium-level, and the calcium/phosphate- to casein ratio can be varied through direct addition of varying quantities of calcium chloride, calcium hydroxide and sodium orthophosphate. This involves the dispersion of the milk protein ingredients, either in the form of wet curd or dried powder in water and addition of calcium hydroxide, calcium chloride and sodium orthophosphate and/or a suitable neutralizing agent, preferably sodium hydroxide. As an alternative process to the microfiltration and ultrafiltration processes described above for the MCCa and MPCCa powders, the resultant dispersions of the acid casein and milk protein are then dried to give MCCa- and MPCCa-style powders, respectively.

In addition to MCCa and/or MPCCa powders being used in the formation of reassembled milks, non-dairy ingredients such as the following can be included: hydrocolloid materials, gums, carbohydrates (for example starch), proteins (for example vegetable proteins), acidifying agents (for examples acidogens such glucono-δ-lactone and/or acids such as lactic, acetic, citric, phosphoric), minerals (for example calcium, magnesium), vitamins (for example retinoid, thiamine, folic acid, ascorbic acid, cholecaciferol, tocopherol), flavours (for example enzyme modified flavours, yeast-based preparations, lyophilised butter oil), flavour-enhancer (for example chloride, potassium chloride), enzyme preparations (for example proteinases, lipases, peptidases), edible colours (chlorophylls, carotenes, patent blue, titanium dioxide), bioactive preparations including enzymes (for example angiotensin-converting enzyme inhibitor), antimicrobial peptides, bioactive peptides (for example antihypertensive-, neuropeptides), lipid components (for example omega-3 fatty acids, eicosapentaenoic and docosahexaenoic acids, and linoleic acid), and safe edible micro-organisms such as bacterial culture preparations (for example *Lactococcus lactis subsp. cremoris*), fungal preparations (for example *Penicillium roquefort, Geotrichium candidum, Brevibacterium linens*), and yeast preparations.

The reassembled milk has the same solids level as the final cheese, and is in effect a liquid "pre-cheese". Typically, the formation of the reassembled milks involves:
1. preparation of serum phase from water and whey powder or UF permeate powder. Alternatively a liquid MF or UF permeate may constitute the serum phase.
2. addition of cream of varying fat content to the serum phase with shearing; alternatively, fat may be added in form of anhydrous milk fat or vegetable fat with the aid of homogenization of the resultant dispersion
3. MCCA or MPCCA are added to the above blend using intensive mixing having due regard to restriction of air incorporation.

The solid content of the reassembled milk can vary in solid content ranging from 9 to 70% (w/w) (see Table 2). The reassembled milk can also be subjected to various treatments. These treatments can include heating, cooling, high pressure, homogenisation, microfluidization, and/or sonication.

The current invention further provides for a method of conversion of the above-reassembled milks into cheese by a novel cheesemaking technique. This cheesemaking technique will not have a whey separation step.

A coagulating enzyme, acid and / or acidogen can be added to the reassembled milks to commence the gelation process. This coagulating enzyme can be chymosin. The gelation conditions can vary with respect to temperature (0 to 90 °C), pH (4.4 to 6.6), coagulant level (0 to 6%) and calcium chloride level (0 to 10mM). The resultant curd can be restructured by size reducing means, for example by cubing or any other means, moulding, and applying pressure to the moulded curd. The curd cubes can also be treated with various materials prior to moulding and pressing, such as salt, flavours/flavour extracts, colours, fungal preparations (for example *Penicillium roquefort, Geotrichium candidum),* cultures (e.g. *Brevibacterium linens*), and yeast preparations. The curd can also be subject to other treatments. These treatments can include high pressure, immersing in liquid brine (sodium chloride, potassium chloride, calcium chloride, water), piercing, heating, kneading, plasticization, texturing, cooling freezing, and/or shaping. Various coating preparations can be applied to the formed curd. These coating preparations can be liquid wax, hydrocarbon-based liquid emulsions, or edible materials. The coatings may contain colourants. These colourants can be chlorophylls, carotenes, patent blue and titanium dioxide. The formed curd can also be sprayed, dipped and/or washed in smear preparations. These smear preparations may contain microorganisms such as yeasts (for example *Candida rugosa*, *Debaryomyces hansenii*, and / or bacteria (*Corynebacterium spp, Micrococcus spp*). The formed curd may also be sprayed and/or dipped in mould preparations. These mould preparations can contain microorganisms such as *Penicillium roqueforti, Geotrichium candidum*, *Brevibacterium linens*. The formed curds can be stored for times ranging from 1 day upwards and at different temperature and humidity and may be exposed to surface coatings or surface flora before or after storage.

Advantages of the current invented MCCa and MPCCa powders over conventional ingredients described in the prior art are the fact that the prepared ingredients have different calcium and phosphate levels which enable the manufacture of cheeses with calcium levels ranging from ~ <1 to 32 mg/g protein. The different calcium levels and in particular the calcium-to-casein ratio have been demonstrated to have a major impact on the textural, rheological, viscoelastic, cooking sensory properties in cheeses made by conventional procedures. The total calcium content of natural cheeses differs markedly with variety. The different calcium levels are a key factor contributing to inter-variety differences. The calcium-to-casein ratio is particularly associated with the ability of curd to plasticize and form strings / sheets when heated and extended and of curd or cheddar to flow at pH values of 5.2 and 5.3. This impact is also evidenced by the modulating effect of casein-associated calcium on the above properties. The percentage of total calcium in cheese that is casein associated increases with cheese pH from 65% at pH 5 to 90% at pH 6 and decreases for cheddar cheese (typically pH 5.3) with ripening time from ~ 75% at 1 day to 60% at 9 months.

A further embodiment of the current invention is the vast potential to make cheeses of different properties. The novel ingredients prepared from reconstructed milk allow the resultant cheeses to have a broad range of calcium and phosphate levels, thereby enabling a diverse range of texture, rheology and cooking properties. It is a further embodiment to have different levels of whey protein denaturation of MPCCa prior to inclusion in the pre-cheese. It is a further embodiment to vary the ratio of casein to whey protein as affected by different ratios of MCCa and MPCCa in the blend or by the addition of whey protein concentrate. It is an additional embodiment to vary the solid levels and protein to fat ratios representative of those found across existing cheeses. It is a further embodiment of the invention to vary the different pre-treatment of the liquid pre-cheese prior to gelation. These treatments include but are not limited to pasteurisation, temperature, homogenisation and high-pressure treatment.

### Brief Description of the Drawings

Figure 1a. Dependency of serum calcium in skimmed milk on level of added sodium citrate/citric acid.
Figure 1b. Calcium content of MCCa powder as affected by level of added trisodium citrate dihydrate + citric acid anhydrous to milk. The molar ratio of added trisodium citrate to citric acid was ~ 7.5.
Figure 2. Scheme for the manufacture of micellar casein with varying calcium (MCCa) :
   Preferred processing pathways shown by solid lines in scheme; the broken lines show other options. Terminology: MCCa denotes micellar casein powder with different levels of calcium;
   Permeate 1 is denoted as MF-treated skim milk and Retentates 2 and 3 as the retentates produced by the mcirofiltration and diafiltration of the MF-treated skim milk (or skim milk),
   respectively. Other calcium sequestrants can be used in place of citrate and citric acid, as described in text.
Figure 3. Scheme for the manufacture of milk protein concentrates with varying calcium, MPCCa. Preferred processing pathways shown by solid lines in scheme; the broken lines show other options. Terminology: MPCCa denotes milk protein concentrate powders with different levels of calcium; Permeate 1 is denoted as MF-treated skim milk and Retentates 2 and 3 as the retentates produced by the ultrafiltration and diafiltration of the MF-treated skim milk (or skim milk), respectively. Other calcium sequestrants can be used in place of citrate and citric acid, as described in the text.

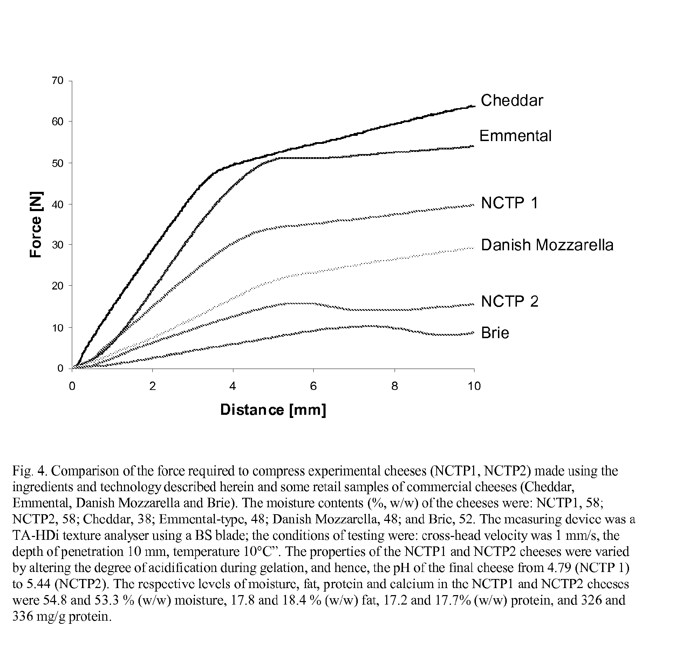

Fig. 4. Comparison of the force required to compress experimental cheeses (NCTP1, NCTP2) made using the ingredients and technology described herein and some retail samples of commercial cheeses (Cheddar, Emmental, Danish Mozzarella and Brie). The moisture contents (%, w/w) of the cheeses were: NCTP1, 58; NCTP2, 58; Cheddar, 38; Emmental-type, 48; Danish Mozzarella, 48; and Brie, 52. The measuring device was a TA-HDi texture analyser using a BS blade; the conditions of testing were: cross-head velocity was 1 mm/s, the depth of penetration 10 mm, temperature 10°C". The properties of the NCTP1 and NCTP2 cheeses were varied by altering the degree of acidification and pH of the product from 5.44 (NCTP1) to 4.79 (NCTP 2). The respective levels of moisture, fat, protein and calcium in the NCTP1 andNCTP2 cheeses were 53.3 and 54.8% (w/w) moisture, 18.4 and 17.8 % (w/w) fat, 17.7 and 17.2 % (w/w) protein, and 336 and 326 mg/g protein.

### Materials and Methods

### Preparation of liquid pre-cheese with the composition of the final cheese

i) Preparation of a milk serum by reconstituting milk permeate powder and / or sweet whey powder in water
ii) Addition of MCCa and / or MPCCa to the milk serum along with milk fat (as cream, plastic cream, butter oil) at levels to give the desired protein-fat ratio and moisture level in the finished cheese.
iii) Blending, agitating and shearing of the blend to ensure a dispersion/mixture with uniform composition and consistency.
iv) Addition and blending and uniform dispersion of optional ingredients into the dispersion /mixture. The optional ingredients can include any edible material e.g. salt, flavours, flavour enhancers, bioactive materials, pre-biotic materials, starches and hydrocolloids or can include enzymes e.g. lipases, peptidases or proteinases to achieve a specific effect in the cheese (Table 2).

### Conversion of liquid pre-cheese into a cheese curd

i) Addition and uniform dispersion of one or more acidifying agents such as starter culture, glucono-δ-lactone and organic acids
ii) Addition of coagulation agents such as rennin, chymosin, pepsin, acidifying agent or other such agents. Heat can also be applied in combination with the above coagulating agents to contribute to the coagulation process.
iii) Incubation of the coagulant-treated pre-cheese.
iv) Self-induced aggregation and gelation of the protein phase of the reassembled milk (pre-cheese) into a restricted-volume, periodic repeating gel structure and the concomitant formation of the cheese curd.
v) Shaping the cheese curd by the distribution of the coagulant-treated pre-cheese into a mould or container of the desired size and shape immediately after dispersion of the coagulant. Alternatively, the pre-cheese can be distributed into final mould/container prior to addition of coagulating agent.

### Re-structuring or re-texturing of the cheese curd.

i) Cutting/breaking/size-reducing the curd into pieces
ii) Placing the curd pieces into a suitable container or mould and applying pressure to the curd or allowing curd to press under its own weight.
iii) Placing the curd pierces in hot water and kneading or stretching,
iv) Or heating and extrusion of the curd pierces.
v) Applying other treatments e.g. salting (brining, dry salting), cheddaring, cooling, freezing, sonication, ultrasound, shearing, high-pressure treating to the curd pierces of moulded curd, and / or
vi) Placing the treated cheese-curd from (i) to (vi) above into a container/package of the desired shape and size

### Aging/holding/maturation of the cheese curd

i) Optional salting of cheese-curd in salting medium (e.g brine) at the desired temperature for the desired time.
ii) Storing for the desired period(s) of time (for times ≥ 1 day), at the desired temperature(s) and relative humidity(s).
iii) Optional application of sprays to surface of, and/or washing/dipping of curds in, smear preparations containing microorganisms such as yeasts (e.g. *Candida rugosa, Debaryomyces hansenii)* and/or bacteria (e.g. *Corynebacterium spp, Micrococcus spp)* or mould preparations containing microorganisms such as *Penicillium roqueforti, Geotrichium candidum, Brevibacterium linens*. This can be performed at any time during the storage period. Optional application of, or dipping of curds in, various coating preparations such as liquid wax, hydrocarbon-based liquid emulsions, or edible materials/batterings; the coatings may contain colourants (for example chlorophylls, carotenes, patent blue, titanium dioxide) and/or antimycotic agents (for example natamycin, salts of sorbic or propionic acid).

### Determination of level of citrate/citric acid solution to be added to skimmed milk during manufacture of MCCa and MPCa powders.

The levels of citrate/citric acid to be added to the skim milk during the manufacture of the MCCa and MPCCa powders were determined so as to establish the relationship between the level of added citrate plus citric acid and the percentage of total calcium in the skimmed milk that was soluble in the milk serum as prepared by ultracentrifugation. Solubilized calcium would be removed during the micro filtration, ultrafiltration and/or diafiltration steps of the skim milk (or microfiltered-treated skim milk) during the preparation of the MCCa and MPCCa powders. The level of calcium to be removed is dictated by the category and the properties required in the finished cheese, and the relationships between the level of calcium in cheese and the rheology and functional properties of the cheese.

The trisodium citrate/citric acid may be added directly to the skim milk prior to microfiltration or to the microfiltered milk retentate prior to diafiltration, using a high-speed mixer. Alternatively the citrate, citric acid may be first dissolved to 10% in water and then added as a solution to the skim milk prior to microfiltration.

### Adjustment of the calcium-casein ratio in MCCa and MPCCa powders.

A citrate/citric acid solution may alternatively be added to the skimmed milk prior to the microfiltration step in the cheesemaking process. Preferably the citrate/citric acid should be added to the retentate obtained on microfiltration (through 0.1 µm membrane) or ultrafiltration (through a 0.0025 µm membrane) of the MF-treated skim, prior to diafiltration. This avoids the contamination of permeate produced during microfiltration of ultrafiltration with added sodium citrtrate, citric acid or the calcium-citrate complex; instead, the latter compounds are lost along with the added water into the permeate by-stream produced on diafiltration of the retentate obtained on microfiltration or ultrafiltration of the MF-treated skim. Following diafiltration, the microfiltered and ultrafiltered retentates are dried to produce MCCa and MPCCa powders, respectively, with calcium levels of <1 to 32 mg/g protein; figure 1b shows calcium levels ranged from 7 to 28 mg /g protein..

### Example 1: Formulation of cheeses of varying dry matter content

The formulations for cheeses of varying target dry matter contents (24 to 51 %, w/w), prepared using the current technology, are presented in Table 1. The compositions of the resultant cheeses are shown in Table 2. As can be seen from the Table 2, the actual dry matter content matched the target dry matter content very closely; moreover, the gross composition, calcium and phosphorous contents, and pH were readily altered by varying the formulation of the reassembled milk, and conditions of gelation (as altered by changing the levels of acidulant and/or rennet). The level of proteolysis, which represents the degree of casein hydrolysis, in the cheese was also varied as seen by comparing cheeses with target dry matter contents of 45 and 51 % (w/w) by altering the pH, level of rennet and temperature of incubation of the rennet-treated reassembled milk.

**Table 2. Formulation of cheeses with different dry matter levels^{1,2,3}**

| Ingredient | Target Dry Matter | | |
|---|---|---|---|
| | **24%** | **45%** | **51%** |
| Whey Powder (%w/w) | 2.50 | 1.72 | 1.99 |
| MCCa powder (%w/w) | 9.00 | 20.67 | 24.02 |
| Cream (%, w/w) | 19.74 | 45.57 | 52.95 |
| Water (% w/w) | 64.78 | 28.06 | 17.29 |
| Salt (% w/w) | 1.92 | 1.92 | 1.67 |
| Acidulant (% w/w) | 1.96 | 1.96 | 1.96 |
| Other (e.g., starter culture, rennet, potassium sorbate) %/w) | 0.10 | 0.10 | 0.11 |
| **Total** | 100.00 | 100.00 | 100.00 |

| | | | |
|---|---|---|---|
| ¹Milk Fat: milk fat is added as cream. ²MCCA, micellear casein powder ³Cream used had a fat content of 40% (w/w) | | | |

**Table 3. Compositional characteristics of cheeses of varying dry matter level**

| | Target Dry Matter Content | | |
|---|---|---|---|
| ***Composition*** | **24%** | **45%** | **51%** |
| Moisture (%, w/w) | 74.31 | 56.46 | 49.46 |
| Fat (%, w/w) | 9.52 | 17.28 | 20.72 |
| Actual Dry matter | 25.69 | 43.54 | 50.54 |
| Protein (%, w/w) | 9.18 | 17.57 | 19.69 |
| Salt (NaCl) (%, w/w) | 1.98 | 2.05 | 1.81 |
| Calcium (%, w/w) | 0.26 | 0.562 | 0.553 |
| Phosphorous (%, w/w) | 0.15 | 0.333 | 0.388 |
| pH | 4.78 | 5.44 | 5.31 |

| ***Proteolysis*** | | | |
|---|---|---|---|
| **Water soluble protein (% total protein)** | - | 14.65 | 6.4 |
| **pH 4.6 Soluble protein (%total protein)** | - | 14.20 | 5.8 |

### Example 1b: Functional characteristics of cheese with different dry matter contents

The data in Table 3 show that functional characteristics of the cheeses were readily altered using the current cheesemaking process. Textural properties of the uncooked cheeses and the degree of heat-induced flow of the melted cheeses are shown in Table 3. The data shows that the force at fracture and firmness of the unheated cheeses were positively related to dry matter content, while the flow of melted cheese was inversely related to dry matter content. Figure 1 compares the force required to cut cheeses with a dry matter content of 48 % (w/w), made using the current technology, with that for retail samples of some well-know commercial cheeses; the figure indicates how cheese with a given dry matter content can be used to provide cut forces which are higher or lower than those of retail cheeses technology of different moisture contents.

**Table 4. Functional characteristics of cheeses of varying dry matter level ^{1,2}**

| | Target Dry Matter Content | | |
|---|---|---|---|
| ***Texture Properties of unheated cheese*** | **24** | **45** | **51** |
| Force at fracture (N) | 0.63 | 2.70 | 8.60 |
| Force at maximum deformation (N) | 0.73 | 3.40 | 10.00 |
| | | | |

| **Cooking Properties of heated Cheese** | | | |
|---|---|---|---|
| Flow/Spread of heated cheese (%) | 140 | 144 | 116 |

| | | | |
|---|---|---|---|
| ¹The measuring device for texture properties was TA-HDi texture analyser using a probe (P5 stainless steel cylinder with a diameter of 5 mm); the conditions of testing were: cross-head velocity was 1 mm/s, the depth of penetration 15 mm, temperature 10°C. ²The flow was monitored by measuring the increase in diameter of a disc of cheese (48 mm diameter, 6 mm thick) on heating at 280°C for 3 min. | | | |

### References

Abd-El-Salam, M.H., El-Shibiny, S., El-Alamy, H.A. and Mehanna, N. (1984). Ultrafiltration of buffalo milk. 1. Some properties of skim milk retentates. Asian Journal of Dairy Research 1, 35-40.
Beresford, T.P. and Cogan, T.M. (1997). Improving Cheddar cheese flavour. In (Cogan, T.M., Fox, P.F. and Ross, R.P. (eds), 5th Cheese Symposium (pp. 53-61). Sandymount Avenue, Dublin, Ireland: Teagasc.
Bumberger E and Belitz H D (1993), 'Bitter taste of enzymic hydrolysates of casein. 1. Isolation, structural and sensorial analysis of peptides from tryptic hydrolysates of β-casein', Zeitschrift für Lebensmittel, Untersuchug und Forschung 197 (1) 14-19.
Cogan, T.M. (1995). Flavour production dairy starter cultures. Journal of Applied Microbiology Symposium Supplement, 79 49S-64S.
Covacevich, H.R. and Kosikowski, F.V. (1979). Buffer, lactic fermentation, and rennet coagulation properties of skim milk retentates produced by ultrafiltratuin. J. Dairy Sci. 62, 204-207.
Fenelon, M.A. (2000). Studies on the role of fat in cheese and the improvement of half-fat Cheddar cheese quality. Ph.D. Thesis, National Univ. of Ireland (pp. 163-166).
Fauquant, J., Maubois, J.-L, & Pierre-A. (1988). Technique Laitiere & Marketing, No 1028, 21-23.
Frister H, Michaelis M, Schwerdtfeger T, Folkenberg D M and Sorensen N K (2000). Evaluation of bitterness in Cheddar cheese, Milchwissenschaft 55, 691-695.
Fox, P.F., McSweeney, P.L.H., Cogan, T.M. and Guinee, T.P. (2004). Cheese Chemistry, Physics and Microbiology, Vol. 1: Geheral Aspects (3rd ed) (pp. 287-317; 361-487). Amsterdam, Netherlands: Elsevier Academic Press.
Garem, A, Schuck, P. and Maubois-J.-L. (2000). Cheesemaking properties of a new dairy- based powder made by a combination of microfiltration and ultrafiltration. Le Lait 80, 25-32.
Guinee, T.P., Harrington, D., Corcoran, M.O., Mulholland, E.O. and Mullins, C. (2000). The compositional and functional properties of Mozzarella, Cheddar and Analogue pizza cheeses. International Journal of Dairy Technology 53, 51-56.
Guinee, T.P., Kilcawley, K.N. and Beresford T.P. (2008). How variable are retail vintage-brands of Cheddar Cheeses in composition and biochemistry Aust. J. Dairy Tech. 63, 50-60.
Guigoz Y and Solms J (1976), Bitter peptides, occurrence and structure, Chemical Senses and Flavor, 2, 71-84.
Kalamas, T.M. and Kincaid, C.M. (2006). Cultured dairy products and methods of manufacture. EP1 733 622A1.
Kindstedt, P.S., Zielinski, A., Almena-Aliste, M. & Ge, C. (2001). A post-manufacture
method to evaluate the effect of pH on Mozzarella cheese characteristics. Aust. J. *Dairy* Technology **56**, 202-207.
Lawrence, R.C. (1989). The use of ultrafiltration technology in cheesemaking. Bulletin 240, International Dairy Federation, Brussels, pp. 2-15.
Lawrence, R.C., Creamer, L.K. and Gilles, J. (1987). Texture development during cheese ripening. Journal of Dairy Science 70, 1748-1760
Lowrie, R.J. and Lawrence, R.C. (1972). Cheddar cheese flavour. IV. A new hypothesis to account for the development of bitterness. New Zealand J. Dairy Science and Tech. 7, 51-53.
Lucey, J.A. & Fox, P.F. (1992). Rennet coagulation properties of late-lactation milk: effect of pH adjustment, addition of CaCl2, variation in rennet level and blending with mid lactation milk, Irish Journal of Agricultural and Food Research, 31, 173-184.
Lucey, J. A. & Fox, P. F. (1993). Importance of calcium and phosphate in cheese manufacture: a review. Journal of Dairy Science 76, 1714-1724.
Lucey, J.A., Kindstedt, P.S. & Fox, P.F. (1992). Seasonality: its impact on the production of good quality Mozzarella cheese. In T.M. Cogan, (Ed.), 3rd Cheese Symposium (pp. 41-47). Fermoy, Co. Cork, Ireland: National Dairy Products Research Centre, Teagasc Moorepark.
Lucey, J.A., Mishra, R., Hassan, A. and Johnson, M.E. (2005). Rheological and calcium equilibrium changes during the ripening of Cheddar cheese. Int. Dairy Journal 15, 645-653. McSweenet, P.L.H., Fox, P.F., Lucey, J.A., Jordan, K.N. and Cogan, T.M. (1993).
Contribution of the indigenous microflora to the maturation of Cheddar cheese. International Dairy Journal 3, 613-634.
Mortensen, B.K. In T.E. Galesloot and Tinbergen, B.J. (eds), Milk proteins 84, Proceedings International Congress, Milk proteins.
O'Brien, B., Mehra, R., Connolly, J.F. & Harrington, D. (1999). Seasonal variation in the composition of Irish manufacturing and retail milks. 1. Chemical composition and renneting properties. Irish Journal of Agricultural and Food Research 38, 53-64.
Parenete, E. and Cogan, T.M. (2004). Starter cultures: General Aspects. In P. F. Fox, P.LH. McSweeney, T.M. Cogan, & T.P. Guinee (eds). Cheese Chemistry, Physics and Microbiology, Vol. 1: General Aspects (3rd ed) (pp. 121-147). Amsterdam, NL: Elsevier Academic Press. Reid, J.R. and Coolbear, T. (1999). Specificity of Lactococcus lactic subsp. cremoris SKI I proteinase, lactocepin III, in low water activity, high salt concentration humecant systems and its stability compared with that of lactocepin I. Journal of Applied Environmental Microbiology 65, 2947-2953.
Tunick, M.H., Guinee, T.P., Van Hekken, D.L. , Beresford, T.P., and Malin, E.L. (2007). Influence of drain pH on low-fat Cheddar cheese rheology. Milchwissenschaft 62, 443-446. Visser S, Hup G, Exterkate F A and Stadhouders J (1983), Bitter flavour in cheese. 2. Model studies on the formation and degradation of bitter peptides by proteolytic enzymes from calf rennet, starter cells and starter cell fractions. Netherlands Milk and Dairy Journal 37,169-180. Wilkinson, M.G., Guinee, T.P., O'Callaghan, D.M. and Fox, P.F. (1995). Effect of cook temperature on the autolysis of starter. Lactococcus lactis subsp. cremoris AM2, and the maturation of Cheddar cheese. Milchwissenschaft 50, 376-380.

### Further Embodiments

1. A process for the production of a MCCa or a MPCCa powder comprising adding a calcium sequestrant to skimmed milk or the permeate resulting from the microfiltration of skimmed milk to give a calcium level of 30 to 40 mg/g protein.
2. A process as claimed in claim 1 wherein the calcium level is adjusted to about 40 mg/g protein.
3. A process as claimed in claim 1 wherein the calcium level is adjusted to 32 mg/g to 40 mg/g protein.
4. A process as claimed in any preceding claim wherein the calcium sequestrant is selected from the group consisting of mixtures of tri-, di-, and mono-sodium citrate with citric acid; the potassium salts of citric acid; the sodium and potassium salts of food grade organic acids including lactic, acetic and oxalic acids; and the sodium or potassium salts of phosphates, trisodium citrate and citric acid.
5. A process as claimed in claim 4 wherein trisodium citrate and citric acid are used at molar ratios of ~ 7.5: 1 to maintain the pH value of milk at native values, typically in the range 6.6 to 6.7.
6. A process as claimed in any preceding claim wherein the skimmed milk is microfiltered using membranes of 1.4 µm prior to subsequent filtration steps.
7. A process as claimed in claim 6 wherein the MF-treated skimmed milk is ultrafiltered using membranes of about 10 kDa (~ 0.0025 µm) prior to the addition of the calcium sequestrant.
8. A process as claimed in claim 6 wherein the MF-treated skimmed milk is microfiltered a second time with membranes of 0.05 -0.20 µm (preferably 0.1 µm) to produce a MCCa retentate.
9. A process as claimed in claim 8 wherein the citrate/ citric acid solution and trisodium citrate are added after the second microfiltration step.
10. A process as claimed in any preceding claim wherein water is added to either ultrafiltration or microfiltration retentate to produce a diluted retentate, and the soluble citrate-calcium complex and unreacted citrate/citric acid arc removed by diafiltration of the diluted milk retentate.
11. A process as claimed in claim 10 wherein the resultant diafiltration retentate is evaporated and spray dried to produce a powder.
12. A process for the production of a MCCa or a MPCCa powder substantially as described herein with reference to the accompanying figures.
13. A process for the production of a MCCa- and MPCCa powder comprising adjusting the calcium level of milk protein ingredients such as acid casein or acid milk proteinate, to give a calcium level of to 40 mg/g protein, by the addition of one or more of calcium chloride, calcium hydroxide and sodium orthophosphate.
14. A process as claimed in claim 13 wherein the acid casein is obtained by acidification of pasteurized skim milk to the isoelectric pH (4.6) of casein by direct addition of one or more acids or of acidogens or by fermentation using a starter culture which converts the lactose in the serum phase of the milk to lactic acid.
15. A process as claimed in claim 13 or 14 wherein the acid is selected from hydrochloric acid, lactic or acetic acid.
16. A process as claimed in claim 13 or 14 wherein the acidogen is glucono-δ-lactone.
17. A process as claimed in claim 13 wherein the milk proteinate is obtained by pH-adjustment of skim milk to values that are higher or lower than that of the native milk (typically pH 6.65); high heat treatment, and re-adjustment of pH to 4.6 using acid, acid or alkali.
18. A process as claimed in claim 17 wherein the milk protein ingredients are dispersed, either in the form of wet curd or dried powder, in water and calcium hydroxide, calcium chloride or sodium orthophosphate and/or a suitable neutralizing agent are added.
19. A process as claimed in claim 18 wherein the neutralizing agent is sodium hydroxide.
20. A process as claimed in any of claims 13 to 19 wherein the resultant dispersions of the acid casein and milk proteinate are dried to give MCCa- and MPCCa powders respectively.
21. An MCCa and / or MPCCa powder whenever produced by a process as claimed in any of claims 1 to 20.
22. An MCCa and / or MPCCa powder having a calcium level of up to 40mg/g protein.
23. A powder as claimed in claim 22 wherein the calcium level is 40 mg/g protein.
24. A powder as claimed in claim 22 wherein the calcium level is 32 mg/g protein.
25. An MCCa and / or MPCCa powder substantially as described herein with reference to the accompanying figures.
26. A reassembled milk produced from an MCCa and / or MPCCa powder as claimed in any of claims 21 to 25.
27. A reassembled milk as claimed in claim 27 further comprising milk fat.
28. A process for the manufacture of cheese comprising the conversion of reassembled milks produced by dissolving an MCCa or MPCCa powder as claimed in claim 21 to claim 25 or a combination thereof, in water.

## Claims

1. A process for the manufacture of cheese which does not involve a whey separation step, the process comprising
the conversion of reassembled milks produced by dissolving an MPCCa powder in water,
wherein the MPCCa powder is obtainable by adding a calcium sequestrant to skimmed milk, or the permeate resulting from the microfiltration of skimmed milk to give a calcium level of < 1 to 40 mg/g protein;
ultrafiltering the permeate of the microfiltered skimmed milk with membranes of about 10kDa (about 0.0025µm) to produce an ultrafiltration retentate and
adding water to theultrafiltration retentate to produce a diluted retentate, and diafiltering the diluted milk retentate to provide a diafiltration retentate.

2. A process as claimed in claim 1 wherein the calcium level is adjusted to 32 mg/g to 40 mg/g protein.

3. A process as claimed in claim 1 wherein the calcium level is adjusted to 7 to 32 mg/g protein.

4. A process as claimed in any preceding claim comprising use of MPCCa powders with different calcium-to-casein ratios and/or buffering capacity.

5. A process as claimed in any preceding claim wherein the calcium sequestrant is selected from the group consisting of mixtures of tri-, di-, and mono-sodium citrate with citric acid; the potassium salts of citric acid; the sodium and potassium salts of food grade organic acids including lactic, acetic and oxalic acids; and the sodium or potassium salts of phosphates, trisodium citrate and citric acid, wherein the trisodium citrate and citric acid are used at molar ratios of ~7.5: 1 to maintain the pH value of milk at native values, typically in the range 6.6 to 6.7.

6. A process as claimed in any preceding claim wherein the skimmed milk is microfiltered using membranes of 1.4 µm prior to subsequent filtration steps.

7. A process as claimed in any prededing claim wherein trisodium citrate and citric acid are used at molar ratios of about 7.5:1 to maintain the pH value at native milk values.

8. A process as claimed in any preceding claim wherein the resultant diafiltration retentate is evaporated and spray dried to produce an MPCCa powder which can subsequently be dissolved in water.

9. A process as claimed inany preceding claim wherein milk fat is added to the reassembled milk.

10. A process as claimed in claim 9 wherein the milk fat is selected from cream, plastic cream or butter oil.

11. A process as claimed in any preceding claim wherein a milk serum is prepared by reconstituting milk permeate powder and/or sweet whey powder in water and adding the MPCCa powder to the milk serum.
